# DEMANDE DE BREVET EUROPEEN

(11) **EP 4 064 736 A1**
(43) Date de publication de la demande: **28.09.2022**
(21) Numéro de dépôt: 22163209.4
(22) Date de dépôt: 21.03.2022
(51) Int. Cl.: H04W 4/00, H01M 10/42, H01M 10/48, H01M 10/613, H01M 10/625, H01M 10/643, H01M 10/6567, H01M 10/6569, H01M 50/213, H01M 50/249, H05K 7/20, G08C 17/02, H04L 67/12, H04Q 9/00, H04W 4/40

(54) **BATTERIE A REFROIDISSEMENT PAR IMMERSION COMPORTANT UN SYSTEME DE COMMUNICATION SANS FIL**

(30) Priorité: 25.03.2021 FR 2103015
(71) Demandeur: ST@RTEC Developpement, 33700 Mérignac (FR)
(72) Inventeur: LOGIE, Benjamin, 33300 BORDEAUX (FR); DEBUISSER, Thomas, 33370 Salleboeuf (FR); PETITDIDIER, Xavier, 33680 Lacanau (FR)
(74) Mandataire: Ipside

(57) **Abrégé**

La présente invention concerne une batterie à refroidissement par immersion comportant au moins un module pourvu d'un système de communication sans fils comme interface entre un système de gestion de la batterie « BMS » et un bus de données à l'extérieur du module, et permettant d'assurer l'étanchéité dudit module. Plus particulièrement, l'invention concerne une batterie à refroidissement par immersion, comportant au moins un module (10) comportant un coffret (1) rempli d'un fluide (9) de refroidissement dans lequel sont immergées des cellules (8) électrochimiques et un système de gestion de la batterie « BMS » (2), caractérisé en ce que :
-ladite batterie comporte un système de communication sans fil relié audit système de gestion de la batterie BMS (2), et comportant des composants d'émission et de réception par onde radio ou optique, et en ce que
-le système de communication sans fil comporte une unité interne (4) et une unité externe (6) situées respectivement à l'intérieur et à l'extérieur dudit coffret (1), lesdites unités interne (4) et externe (6) communiquant au travers des signaux tout ou rien se propageant à travers d'au moins un hublot (5) intégré au niveau d'une paroi du coffret (1).

## Description

### Domaine technique

La présente invention concerne le domaine des batteries à refroidissement par immersion pour des véhicules électriques ou des applications stationnaires. Plus particulièrement, l'invention porte sur une batterie à cellules électriques immergées comportant un système de communication sans fil.

### Etat de la technique

La gestion thermique des batteries électriques est un enjeu majeur pour les constructeurs de véhicules électriques. Les batteries lithium ion ou similaires présentent des problèmes de surchauffe ou des courts circuits pouvant de diminuer la durée de vie de la batterie ou générer des incendies.

Le refroidissement par immersion est une excellente solution pour éviter les courts-circuits, la surchauffe et l'endommagement de la batterie. Cette technique consiste à immerger dans un fluide les cellules électrochimiques de modules de la batterie pour permettre une évacuation rapide des calories. Plus particulièrement, les cellules électrochimiques et généralement le système de gestion de la batterie « BMS » sont mis à l'intérieur d'un coffret rempli avec un fluide tel qu'une huile ou un réfrigérant. En fonction du besoin de refroidissement, le coffret peut être rempli avec un fluide soit en phase liquide, soit en phase gazeuse, soit diphasique.

Le refroidissement par immersion est une solution avantageuse d'un point de vue de gestion thermique et des applications nécessitant des très hautes puissances, toutefois, elle apporte des nouvelles contraintes à la gestion des modules de la batterie. En effet, la batterie du véhicule électrique est formée par plusieurs modules reliés et communiquant entre eux afin de gérer au mieux la performance de la batterie et la sécurité de son utilisation. Cette mise en communication des modules met en œuvre typiquement une liaison filaire, ce qui pose des problèmes d'étanchéité dans une batterie à refroidissement par immersion. Par exemple, dans l'architecture des batteries électriques existantes, le bus des données extérieur est typiquement relié de manière filaire avec le BMS au travers de connecteurs non hermétiques situés au niveau du coffret des modules. Le fluide à l'intérieur du coffret peut donc s'échapper par ces connecteurs.

Une solution à ce problème consiste à relier le BMS au bus de données au travers d'un câble traversant la paroi du coffret du module par une sortie comportant un passe-câble, ce passe-câble serrant très fortement le câble pour permettre une fermeture relativement étanche au niveau de la sortie du coffret. Cette solution est néanmoins insuffisante pour garantir l'étanchéité des modules en raison du gaz ou du liquide pouvant s'insérer dans le câble à chacune de ses extrémités où les fils internes sont dénudés.

Il est donc souhaitable d'établir une communication sans fils entre le BMS et le bus de données standard filaire à l'extérieur de la batterie. Toutefois, ils existent plusieurs contraintes techniques pour la transmission de ces signaux, tout d'abord sur un plan physique et le haut degré de matériaux interférents pouvant compromettre la qualité de la transmission.

D'autre part, les protocoles de communication d'un bus de données intègrent plusieurs règles de niveaux analogiques et des règles de contrôle à respecter, et ceci dès leurs couches basses matérielles.

Prenons par exemple le bus de communication CAN (Controller Area Network) et la mise en forme du signal pour son intégration dans le bus de données. Les microcontrôleurs utilisés habituellement ne sont pas directement compatibles. Les microcontrôleurs ont un signal d'émission TX et un signal de réception RX. Ces signaux sont tout de même rendus spécifiques au CAN par les couches basses matérielles et logicielles du microcontrôleur et deviennent alors des signaux CAN_TX et CAN_RX. Il est ensuite nécessaire d'utiliser un composant spécifique, un driver CAN, pour transformer ces CAN_TX et CAN_RX en signaux différentiels CAN HIGH et CAN LOW, les signaux du bus CAN. Toutefois, ce protocole de communication est difficilement reproductible avec un module de communication sans fils.

### Expose de l'invention

Le but de l'invention est de proposer un système de communication pour une batterie à refroidissement par immersion ne compromettant pas l'étanchéité de ladite batterie.

Un autre objectif de l'invention, est que ce système soit apte à son intégration dans l'architecture informatique d'un véhicule électrique, et notamment qu'il puisse être relié à un bus de données filaire.

À cette fin, l'invention propose une batterie à refroidissement par immersion, comportant au moins un module comportant un coffret rempli d'un fluide de refroidissement dans lequel sont immergées des cellules électrochimiques et un système de gestion de la batterie « BMS », caractérisé en ce que :
- ladite batterie comporte un système de communication sans fil relié audit système de gestion de la batterie BMS, et comporte des composants d'émission et de réception par onde radio ou onde optique, et en ce que
- le système de communication sans fil comporte une unité interne et une unité externe situées respectivement à l'intérieur et à l'extérieur dudit coffret, lesdites unités interne et externe communiquant au travers des signaux bruts tout ou rien se propageant au travers d'un hublot intégré au niveau d'une paroi du coffret, et en ce que
- ledit hublot est perméable à au moins une partie des ondes du spectre visible, du spectre infrarouge et/ou de la bande de très hautes fréquences.

L'invention propose ainsi une solution efficace pour la mise en communication du BMS avec un bus de données, sans compromettre l'étanchéité du module et assurant la propagation de signaux dans un environnement pouvant compromettre une transmission sans fil.

De préférence, l'unité externe comporte une carte électronique et des connecteurs de liaison filaire Tx, Rx reliés à un bus de données mettant en œuvre un protocole de communication choisi parmi CAN, SPI, ISOSpi, Ethernet ou RS232/485, et les signaux échangés entre l'unité interne et l'unité externe intègrent une couche physique (dite aussi matérielle) ou une sous-couche physique la plus basse du protocole du bus de données. Par exemple, le système de communication est configuré pour être intégré dans un bus CAN, et les signaux échangés entre l'unité interne et l'unité externe intègrent uniquement un protocole de communication de la sous-couche physique la plus basse du bus CAN, c'est à dire la sous-couche PLS « Physical signalling ». Il est ainsi possible d'assurer une continuité dans la transmission de signaux provenant ou en direction du bus de données, avec les signaux échangés entre l'unité interne et externe du système de communication sans fil.

L'unité interne et externe sont donc configurées pour ne pas modifier un protocole de communication de la couche matérielle ou physique basse des signaux à transmettre.

Dans un mode de réalisation, le système de gestion de la batterie immergé est un BMS esclave et les signaux à échanger entre l'unité interne et l'unité externe comportent :
- une trame de vie dite « on/off » pour réveiller et/ou mettre en veille une carte électronique dudit BMS ;
- des trames de données brutes comportant des mesures de tension et de température des cellules électrochimiques dudit module, et/ou
- un bit de bonne santé.

Dans un autre mode de réalisation, le système de gestion de la batterie est un BMS maître et les signaux à échanger entre l'unité interne et l'unité externe comportent :
- une trame de vie dite « on/off » pour réveiller et/ou mettre en veille une carte électronique dudit BMS ; et
- des trames de données structurées comportant une ou plusieurs données choisies parmi un état de santé, un état de charge, des données ou des statistiques de fonctionnement et ou des interprétations temporelles dudit module, et optionnellement
- des trames de données brutes comportant des mesures de tension et de température des cellules électrochimiques dudit module et/ou le bit de bonne santé

Selon un mode de réalisation de l'invention, l'unité interne et l'unité externe communiquent au travers des signaux optiques en full duplex ou en half-duplex, au moyen d'une pluralité de composants d'émission et de réception optiques dédiés, respectivement, à la communication des signaux de contenu prédéfini.

Par exemple :
- un premier signal comportant la trame de vie « on/off » est transmis au moyen d'un premier émetteur optique de l'unité externe à un premier récepteur optique de l'unité interne ;
- un deuxième signal comportant des trames de données est transmis et reçu au moyen d'un deuxième émetteur optique et un deuxième récepteur optique, c'est-à-dire un couple émetteur-récepteur dans chacune des unités interne et externe pour communiquer en full-duplex;
- un troisième signal comportant le bit de bonne santé est transmis au moyen d'un troisième émetteur optique de l'unité interne à un troisième récepteur optique de l'unité externe.

En particulier, les composants d'émission de l'invention sont des émetteurs optiques formés par une diode émettrice infrarouge ou une diode laser accompagnée essentiellement d'un circuit de pilotage, et les composants de réception sont des récepteurs optiques formés par une diode réceptrice, suivie essentiellement d'un circuit d'amplification et de filtrage.

Selon un mode de réalisation, le coffret comporte un seul hublot et chaque signal à transmettre est propagé au travers dudit hublot par un canal de longueur d'onde différente et prédéfinie pour chaque signal à transmettre. Soit le coffre comporte une pluralité de hublots pour chaque signal à transmettre, et ladite transmission est effectuée par un canal d'une seule longueur d'onde pour l'émission d'un ensemble de signaux et/ou de sa réception.

Dans un autre mode de réalisation, l'unité interne et l'unité externe comportent respectivement une antenne associée à un émetteur/récepteur ultrahaute fréquence pour Wi-Fi ou GSM, et des trames échangées comprennent tout ou partie des signaux à échanger.

La batterie de l'invention peut comporter également une pluralité des modules pourvus respectivement d'un système de communication sans fil.

L'invention concerne également véhicule intégrant une batterie selon l'invention, tel qu'une voiture, un train, un avion, un bus ou un véhicule utilitaire.

### Brève description des dessins

On comprendra mieux l'invention à l'aide de la description, faite ci-après à titre purement explicatif, des modes de réalisation de l'invention en référence aux figures.
[Fig. 1] Une représentation schématique de la batterie de l'invention comportant un système de communication sans fils selon un premier mode de réalisation.
[Fig. 2] Une représentation schématique de la batterie de l'invention comportant un système de communication sans fils selon un deuxième mode de réalisation.
[Fig. 3] Une représentation schématique de la batterie de l'invention comportant une pluralité des modules et sa liaison à un bus de données.
[Fig. 4] Une représentation schématique de la transmission de signal selon l'invention pour un bus CAN

### Description détaillée des modes de réalisation de l'invention

La présente invention concerne une batterie à refroidissement par immersion comportant au moins un module pourvu d'un système de communication sans fil.

Plus particulièrement, l'invention concerne un pack batterie nécessitant un parfait management électrique et thermique comportant une pluralité de modules, chaque module étant pourvu d'un module de communication sans fil comme interface entre un système de gestion de la batterie « BMS » et un bus de données reliant les modules à un processeur central.

La batterie de l'invention est spécialement conçue pour être intégrée dans un véhicule électrique et dans un système de gestion modulaire de la batterie du véhicule. La batterie est par exemple une batterie de véhicule électrique, de bus, de train, ou de véhicule utilitaire nécessitant une grande puissance, soit une batterie électrique stationnaire.

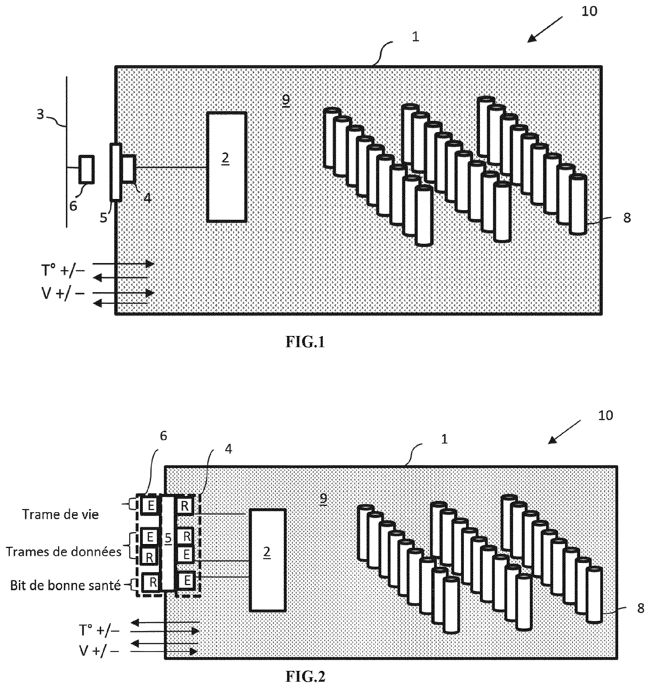

Les figures 1 à 3 illustrent une représentation schématique d'un module 10 de batterie refroidie par immersion selon différents modes de réalisation de l'invention. Quel que soit le mode de réalisation, le module 10 comporte un coffre 1 hébergeant à son intérieur des cellules 8 électrochimiques connectées en série ou en parallèle, et un système de gestion de la batterie « BMS » 2. Un volume intérieur du coffret 10 est rempli d'un fluide 9 dans lesquels sont immergées les cellules 8 et le BMS 2, ce fluide peut être sous phase liquide, gazeuse ou une combinaison de ces derniers. Les cellules électrochimiques peuvent être de type lithium-ion ou sodium-ion, toutefois, l'invention n'est pas limitée à un type spécifique de cellules électrochimiques.

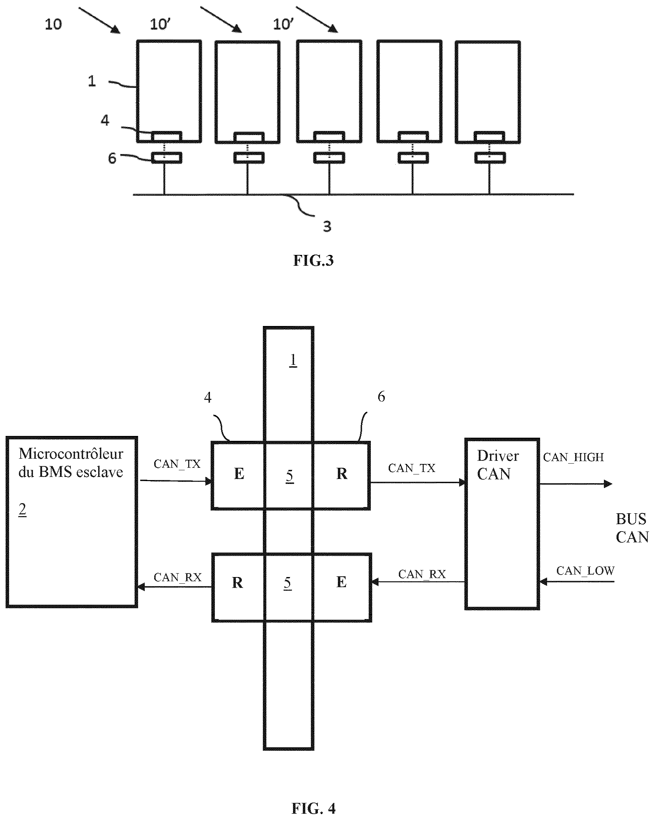

De manière avantageuse, l'invention propose de fournir chaque module de la batterie avec un système de communication sans fil permettant de relier le BMS 2 avec le bus de données à l'extérieur du coffret sans compromettre l'étanchéité du module. Le système de communication sans fil comporte une unité interne 4 reliée de manière filaire au BMS et une unité externe 6 reliée au bus de données, chaque unité interne et externe comportant respectivement, une carte électronique, des connecteurs filaires Tx, Rx, des composants d'émission et de réception par onde radio ou optique, ces derniers étant aptes à transmettre un signal compatible avec un protocole de communication de base du bus de données (CAN, SPI, ISOSpi, RS232/485, Ethernet...). Plus particulièrement, l'invention propose de transmettre des signaux bruts de type tout ou rien TOR, et intégrant uniquement le protocole de communication de la couche matérielle ou physique, voir la sous-couche la plus basse et brute du bus de communication. Par exemple, pour un bus CAN (figure 4), la couche la plus basse du protocole est la « couche physique » et la sous-couche la plus basse de la couche physique est la sous-couche PLS « Physical signalling », cette dernière étant en charge du codage et décodage bit, du bit timing et de la synchronisation. Les signaux TX et RX tout ou rien de la sous-couche la plus basse n'ont pas été modifiés pour un driver ou un transceiver pour appliquer par exemple la deuxième sous-couche PMA « Physical Médium Attachement » du CAN, cette dernière permettant de transmettre des signaux différentiels CAN HIGH et CAN LOW.

Quelque soit le mode de réalisation et le protocole de communication du bus de données, les signaux sont transmis dans un état brut, et avant l'encapsulation de données par la couche de liaison du bus de données. Par signal brut tout ou rien, on entend ainsi dans la présente invention, que le signal est dans un état binaire brut, non différentiel et avant encapsulation de données.

L'unité externe 6 peut ainsi être relié de manière filaire au bus de données pour la transmission de données à l'application du véhicule de manière classique. Bien entendu, avant son intégration au bus de données ces signaux seront traités pour appliquer les autres couches du protocole de communication. Tel qu'illustré à la figure 4, dans les cas du protocole CAN, les signaux seront intégrés au bus comme CAN HIGH et CAN LOW en appliquant la sous-couche PMA par un driver ou transceiver de manière connue.

Afin d'optimiser la communication entre l'unité interne 4 et l'unité externe 6, l'invention propose d'intégrer au moins un hublot 5 perméable aux ondes électromagnétiques sur une paroi du coffret 1, c'est-à-dire une fenêtre ou un conduit installées de manière étanche, traversant la paroi du coffret, et étant perméables à une gamme de longueur d'onde et fréquences prédéfinis, tel qu'au moins une partie de la bande du spectre visible et infrarouge (pour la transmission par voie optique ) ou de la bande de très hautes fréquences (pour la transmission par onde radio).

L'unité interne 4 est disposée au niveau du hublot 5, ou au moins sensiblement proche de celuici pour augmenter l'efficacité de transmission des signaux vers l'extérieur du coffret 1. L'unité extérieure 6 est également située dans une zone de proximité audit hublot. Les unités interne 4 et externe 6 peuvent ainsi communiquer entre elles sans une possible perturbation apportée par le matériau du coffret. De même, les unités interne et externe sont suffisamment proches pour garantir une communication stable, rapide et sans perturbation des autres composants électroniques et de matériaux de la voiture.

Dans un mode de réalisation de l'invention, l'unité externe 6 est configurée pour transmettre une trame de vie dite « on/off » au module interne 4 et réveiller une carte électronique du BMS. En réponse, le BMS communique un ou plusieurs signaux comportant des données sur l'état de fonctionnement du module.

Le système de communication sans fil de l'invention peut être mis en œuvre avec un BMS 2 immergé de type esclave ou maître. Un BMS maître comporte une carte intelligente immergée intégrant des fonctions de traitement de signaux, pendant qu'un BMS esclave transmet des signaux l'extérieur du module pour son traitement par un BMS maître à l'extérieur du module. Plus particulièrement, le BMS esclave est configuré pour transmettre des données brutes sur les voltages et les températures mesurées à un BMS maître situé à l'extérieur du module. Le BMS esclave comporte donc une carte électronique reliée à une pluralité de carte de mesures, tel que des ASIC spécialisés dans la gestion de batteries et qui peuvent piloter l'équilibrage (tels que MAX11068, LTC6811, DS2726, AD7280, ISL9216), ainsi que d'autres composants pour assurer le fonctionnement dudit BMS tel que : des régulateurs à découpage pour générer les alimentations nécessaires au fonctionnement des autres composants de la carte (i.e. AP1117, TDA3663), des transistors de pilotage de signaux, (i.e. BSS84, 2N7002), des composants passifs tels que des résistances, des condensateurs, des bobines ou encore des diodes, des connecteurs de familles et éventuellement des drivers de communication (filaires ou sans fil), tels que TCAN1146, SN65HVD, LTC2875 ou MAX3057 pour le CAN par exemple.

Dans un autre mode de réalisation, le BMS 2 immergé est un BMS maître ou intelligent, mesurant la température et la tension des cellules, mais intégrant également des moyens de traitement de données pour fournir des données structurées à un applicatif extérieur, telles qu'un état de santé, un état de charge, et différentes données quantifiées (des compteurs d'événements particuliers, des interprétations temporelles, etc.). Le BMS 2 maître comporte donc une carte électronique intelligente et intégrant les cartes de mesure et les composants choisis pour le BMS esclave, ainsi qu'un microcontrôleur (i. e. par exemple un microcontrôleur de 8 à 32 bits de famille R8C), des optocoupleurs, des amplificateurs opérationnels, de portes logiques, des composants de puissance etc.

Par exemple, l'état de santé ou « SOH » par ses sigles en anglais « state of health » quantifie le degré de vieillissement des cellules du module se basant sur la perte de son impédance interne et/ou de la perte de capacité, il est donc essentiel pour évaluer l'état de disponibilité des équipements d'alimentation de secours et constitue un indicateur de la nécessité d'actions de maintenance sur la batterie. Dans un mode de réalisation, la carte électronique de l'unité interne 4 reçoit du BMS maître par liaison filaire un signal d'état de santé du module 10 qu'il transmet à l'unité externe 6, ledit état de santé étant calculé par le BMS maître sous forme d'un pourcentage de capacité restante dans les cellules électrochimiques du module (i.e. 80% de capacité).

Le BMS 2, qu'il soit esclave ou maître, est également configuré pour transmettre un signal comportant un bit de bonne santé, par exemple sous forme d'un signal passant périodiquement de 0 à 1 et inversement. Le bit de bonne santé permet de signaler un état de bon fonctionnement de la carte électronique du BMS, et notamment que les cartes de mesure et/ou le microcontrôleur sont opérationnels.

Suivant un mode de réalisation de l'invention, le système de communication sans fil met en œuvre un procédé de transmission par onde radio (i.e. Wifi, GSM...) ou un procédé de communication par voie optique (i.e. infrarouge, laser).

La figure 1 illustre un premier mode de réalisation du système de communication sans fil par onde radio. Ce mode de réalisation a comme avantage un placement relativement libre des unités interne 4 et externe 6 du système de communication sans fil. L'unité interne 4 est positionnée à l'intérieur du coffret proche au hublot, et de préférence face au hublot 5 pour optimiser la transmission des données vers l'extérieur du module 10. L'unité externe 6 peut être placée à convenance suivant un niveau d'intégration des données souhaité au bus de données. Par exemple, il peut être situé plus proche d'un nœud du bus de données dédié audit module 10.

La figure 2 illustre un deuxième mode de réalisation du système de communication sans fil avec communication par voie optique. Dans ce mode de réalisation, les unités interne 4 et externe 6 sont situées de préférence face à face, d'un côté et de l'autre du hublot 5. En particulier, l'invention propose d'attribuer un canal et des composants d'émission et de réception dédiés à chaque signal à transmettre (i.e. trames de données, bit de bonne santé, trame de vie on/off). Par exemple, l'invention propose de mettre en œuvre une longueur d'onde spécifique pour le signal comportant la trame de vie on/off, une autre longueur d'onde pour le signal comportant des trames de données, et une autre longueur d'onde pour le bit de bonne santé. Il est ainsi possible de transmettre l'ensemble de signaux au travers d'un seul hublot et limiter les coûts d'adaptation du coffret, tout en limitant les interférences entre les signaux propagés par ce seul hublot.

Tel qu'illustré sur la figure 2, dans ce mode de réalisation, l'unité interne et l'unité externe comportent une pluralité des émetteurs optiques E et des récepteurs R optiques dédiés à chaque signal à transmettre. Notamment, une paire d'émetteur-récepteur optique dans chacune des unités interne 4 et externe 6 pour transmettre dans un sens bidirectionnel des trames de données, et un émetteur E dans l'unité externe dédié à transmettre par un canal unidirectionnel la trame de vie à un récepteur R de l'unité interne, et un autre émetteur E dédié à transmettre par un canal unidirectionnel le bit de bonne santé à un récepteur R de l'unité externe 6. Dans un autre mode de réalisation, le module comporte une pluralité des unités internes et des unités externes indépendantes et intégrant ladite pluralité des émetteurs E et des récepteurs optiques.

Avantageusement, dans ce mode de réalisation mettant en œuvre un procédé de transmission par voie optique, le hublot est implémenté sous forme de fenêtre et comporte de préférence un matériau permettant de filtrer au moins partiellement la lumière du spectre visible afin d'optimiser la transmission des données par voie optique, et limiter les parasites tels que la lumière du jour, ou d'un néon. Dans un autre mode de réalisation, le hublot peut être implémenté comme un conduit permettant le passage d'un signal optique, traversant la paroi de manière étanche et s'étendant de manière plus ou moins importante d'un côté et d'un autre de la paroi du coffret. Bien entendu, les ouvertures de ce conduit sont étanches à ses extrémités.

Dans un troisième mode de réalisation, la communication se fait par un seul canal et le module 10 comporte un hublot et des composants d'émission et/ou réception pour chaque signal à transmettre et comportant un contenu prédéfini. Par exemple, un premier hublot pour la transmission d'un signal comportant la trame de vie on/off, un deuxième hublot pour le signal comportant les trames de données, et un troisième hublot pour le signal comportant l'état de santé ou bit de bonne santé.

Dans un mode de réalisation préféré, les composants d'émission sont des émetteurs optiques formés par une diode émettrice infrarouge tel que la HSDL-4220 accompagnée essentiellement d'un circuit de pilotage, et éventuellement d'un jeu de MOS pour adapter si besoin la tension d'alimentation et imposer un état de repos. Les composants de réception sont des récepteurs optiques formés par une diode réceptrice tel que la BPV22NF, suivi essentiellement d'un circuit d'amplification et de filtrage, tel que le LT328CS8. En effet, il est souhaité de fournir les composants les plus basiques possibles et de sorte à transmettre un signal brut, sans modulation ou transformation du signal, ainsi que d'autres fonctionnalités propres aux protocoles de communication infrarouge classique comme le protocole RC5.

L'invention offre ainsi un système de communication efficace pour une batterie à refroidissement par immersion, ledit système étant apte à travailler avec des transmissions de données haut-débit (1Mb/s) mais aussi avec des états stables, au moyen par exemple des entrées sorties TOR. La transmission des données est assurée sans compromettre l'étanchéité des modules, et la batterie est facilement intégrable dans une voiture électrique sans remettre en cause la conception de son réseau informatique.

## Revendications

1. Batterie à refroidissement par immersion, comportant au moins un module (10) comportant un coffret (1) rempli d'un fluide (9) de refroidissement dans lequel sont immergées des cellules (8) électrochimiques et un système de gestion de la batterie « BMS » (2), **caractérisé en ce que** :
- ladite batterie comporte un système de communication sans fil relié audit système de gestion de la batterie BMS (2), et comportant des composants d'émission et de réception par onde radio ou optique, et **en ce que**
- le système de communication sans fil comporte une unité interne (4) et une unité externe (6) situées respectivement à l'intérieur et à l'extérieur dudit coffret (1), lesdites unités interne (4) et externe (6) communiquant au travers des signaux bruts tout ou rien se propageant à travers d'au moins un hublot (5) intégré au niveau d'une paroi du coffret (1), et **en ce que** ledit hublot est perméable à au moins une partie des ondes du spectre visible, du spectre infrarouge et/ou de la bande de très hautes fréquences.

2. Batterie selon la revendication 1, l'unité externe (6) comporte une carte électronique et des connecteurs de liaison filaire Tx, Rx reliés à un bus de données, et dans laquelle les signaux échangés entre l'unité interne (4) et l'unité externe (6) intègrent uniquement un protocole de communication d'une couche physique ou d'une sous-couche physique la plus basse du bus de données.

3. Batterie selon l'une des revendications précédentes, dans lequel le système de communication est configuré pour être intégré dans un bus CAN, et les signaux échangés entre l'unité interne (4) et l'unité externe (6) intègrent uniquement un protocole de communication de la sous-couche physique la plus basse du bus CAN..

4. Batterie selon l'une des revendications précédentes, dans laquelle le système de gestion de la batterie est un BMS esclave et les signaux à échanger entre l'unité interne (4) et l'unité externe (6) comportent :
- une trame de vie dite « on/off » pour réveiller et/ou mettre en veille une carte électronique dudit BMS ;
- des trames de données brutes comportant des mesures de tension et de température des cellules électrochimiques dudit module, et
- un bit de bonne santé.

5. Batterie selon l'une des revendications 1 à 3, dans laquelle le système de gestion de la batterie est un BMS maître et les signaux à échanger entre l'unité interne (4) et l'unité externe (6) comportent :
- une trame de vie dite « on/off » pour réveiller et/ou mettre en veille une carte électronique dudit BMS ; et
- des trames de données structurées comportant une ou plusieurs données choisies parmi un état de santé, un état de charge, des données ou des statistiques de fonctionnement et ou des interprétations temporelles dudit module, et optionnellement
- des trames de données brutes comportant des mesures de tension et de température des cellules électrochimiques dudit module et/ou un bit de bonne santé.

6. Batterie selon l'une des revendications précédentes, dans laquelle l'unité interne et l'unité externe communiquent au travers des signaux optiques en full duplex ou en half-duplex, et le système de communication sans fil comporte une pluralité des composants d'émission et de réception optiques dédiés, respectivement, à la communication des signaux de contenu prédéfini.

7. Batterie selon l'une des revendications précédentes, dans laquelle les composants d'émission sont des émetteurs optiques (E) formés par une diode émettrice infrarouge ou une diode laser accompagnée essentiellement d'un circuit de pilotage, et les composants de réception sont des récepteurs optiques (R) formés par une diode réceptrice, suivie essentiellement d'un circuit d'amplification et de filtrage.

8. Batterie selon l'une des revendications 6 ou 7, dans laquelle :
- un premier signal comportant la trame de vie « on/off » est transmis au moyen d'un premier émetteur optique (E) de l'unité externe (6) à un premier récepteur optique (R) de l'unité interne (4) ;
- un deuxième signal comportant des trames de données brutes ou des données structurées est transmis et reçu au moyen d'un deuxième émetteur optique (E) et un deuxième récepteur optique (R) dans chacune des unités interne (4) et externe (6) ; et
- un troisième signal comportant le bit de bonne santé est transmis au moyen d'un troisième émetteur optique (E) de l'unité interne (4) à un troisième récepteur optique (R) de l'unité externe (4).

9. Batterie selon l'une des revendications 6 à 8, dans laquelle le coffret (1) comporte un seul hublot (5) et chaque signal à transmettre est propagé au travers dudit hublot (5) par un canal de longueur d'onde différente et prédéfini pour chaque signal à transmettre.

10. Batterie selon l'une des revendications 6 à 8, dans laquelle le coffret (1) comporte une pluralité de hublots (5) pour chaque signal à transmettre, et ladite transmission est effectuée par un canal d'une seule longueur d'onde pour l'émission d'un ensemble de signaux.

11. Batterie selon l'une des revendications 6 à 10, dans lequel ledit hublot est implémenté sous forme d'un conduit traversant de manière étanche la paroi du coffret, et permettant la transmission desdits signaux optiques.

12. Batterie selon l'une des revendications 1 à 5, dans laquelle l'unité interne (4) et l'unité externe (6) comportent respectivement une antenne associée à un émetteur/récepteur ultrahaute fréquence tel que Wi-Fi ou GSM, et des trames échangées comprennent tout ou partie des signaux à échanger.

13. Batterie selon l'une des revendications précédentes, ladite batterie comportant une pluralité des modules (10) pourvus respectivement d'un système de communication sans fil.

14. Véhicule intégrant une batterie selon l'une des revendications précédentes, tel qu'une voiture, un train, un avion, un bus ou un véhicule utilitaire.
